# EUROPÄISCHE PATENTSCHRIFT

(11) **EP 1 346 817 B1**
(45) Veröffentlichungstag und Bekanntmachung des Hinweises auf die Patenterteilung: **20.10.2004**
(21) Anmeldenummer: 03100440.1
(22) Anmeldetag: 24.02.2003
(51) Int. Cl.: B29C 65/06

(54) **Verfahren zum Vibrationsschweissen und Werkzeug zu dessen Durchführung**
Process for vibration welding and apparatus for the same
Procédé de soudage par vibration et appareil pour son exécution

(30) Priorität: 18.03.2002 DE 10211875
(43) Veröffentlichungstag der Anmeldung: 24.09.2003
(73) Patentinhaber: Mann + Hummel GmbH, 71638 Ludwigsburg (DE)
(72) Erfinder: Jessberger, Thomas, 71679, Asperg (DE); Müller, Matthias, 74226, Nordheim (DE)

(56) Entgegenhaltungen:
- DE-A- 19 717 196
- GB-A- 2 279 035
- US-A- 4 667 842
- US-A- 4 811 760

## Beschreibung

Die Erfindung betrifft ein Verfahren der im Oberbegriff des Anspruchs 1 angegebenen Gattung und ein Werkzeug zu dessen Durchführung nach dem Oberbegriff des Anspruchs 4.

Die US 4 811 760 offenbart ein Verfahren zum Vibrationsschweißen von Bauteilen. Hierbei verfügt das zu bewegende Bauteil über Absätze, in welche Bolzen des Werkzeuges eingreifen. Durch das Zusammenwirken der Absätze mit den Bolzen wird das Bauteil relativ zu seinem Gegenstück bewegt und damit verschweißt.

Beim Vibrationsschweißen werden die zu verbindenden Werkstücke gegeneinander bewegt, wobei insbesondere ein Bauteil ortsfest gehalten ist und ein Bauteil die vibrierende Bewegung ausführt. Die Fixierung der Werkstücke am Schweißwerkzeug sowie die Übertragung der Vibrationsbewegung und des Anpreßdrucks werden üblicherweise am Schweißrand vorgenommen. Zur Übertragung der Schweißbewegung weist das Schweißwerkzeug rautenförmige Erhebungen im Bereich des Schweißrands auf, die sich nach dem Schweißvorgang auf der Bauteiloberfläche abzeichnen. Insbesondere bei hochwertigen Bauteilen, beispielweise bei Designabdeckungen von Luftfiltern oder Motorblöcken, werden diese rautenförmigen Eindrücke als störend empfunden.

Alternativ dazu können zusätzliche Haltelemente zur Fixierung des zu vibrierenden Bauteils am Werkzeug zum Einsatz kommen. Durch die Vibration können sich diese Elemente jedoch lösen. Die benötigten zusätzlichen Bauteile erfordern außerdem einen erhöhten Aufwand beim Anbringen und Entfernen und verursachen zusätzliche Kosten.

Der Erfindung liegt die Aufgabe zugrunde, ein Verfahren zum Vibrationsschweißen der gattungsgemäßen Art zu schaffen, das hohen Anforderungen an die Oberflächenqualität gerecht wird sowie ein Werkzeug zu dessen Durchführung vorzusehen.

Diese Aufgabe wird durch ein Verfahren mit den Merkmalen des Anspruchs 1 und durch ein Werkzeug mit den Merkmalen des Anspruchs 4 gelöst.

Durch die Übertragung der Vibrationsbewegung an reliefartig ausgebildeten Vertiefungen oder Erhöhungen im vibrierenden Bauteil muß die Oberfläche des Werkzeugs im Bereich der Schweißfläche nicht strukturiert sein. Im Bereich der Schweißfläche überträgt das Werkzeug lediglich den Anpreßdruck, der meist etwa senkrecht zur Schweißfläche wirkt. Das Werkzeug kann mit einer ebenen Fläche am Bauteil zur Übertragung des Anpreßdrucks zum Eingriff kommen, so daß sich keine Eindrücke auf dem Bauteil abzeichnen. Die Übertragung der Vibrationsbewegung kann sowohl über Erhöhungen als auch über Vertiefungen am Bauteil stattfinden.

Es ist vorgesehen, daß die Schweißfläche an einem umlaufenden Schweißrand ausgebildet ist, der zu einer Vertiefung oder Erhöhung einen Abstand aufweist. Es kann jedoch auch zweckmäßig sein, daß das vibrierende Bauteil Vertiefungen aufweist, deren dem Werkzeug abgewandte und dem anderem Bauteil zugewandte Fläche die Schweißfläche darstellt. Vorteilhaft ist die Vertiefung oder Erhöhung ein Schriftzug oder ein Logo. Für die Übertragung der Vibrationsbewegung können jedoch auch andere Erhöhungen oder Vertiefungen des Bauteils zum Einsatz kommen.

Für ein Werkzeug zum Vibrationsschweißen zweier Bauteile, die an einer Schweißfläche miteinander verbunden werden, wobei das vibrierende Bauteil am Werkzeug und das andere Bauteil ortsfest angeordnet ist, ist vorgesehen, daß das Werkzeug mindestens eine Erhöhung oder Vertiefung aufweist, die auf eine Vertiefung oder Erhöhung des zu vibrierenden Bauteils abgestimmt ist und zur Übertragung der Vibrationsbewegung des Werkzeugs mit dieser zusammenwirkt. Zur Verringerung der auf die Vertiefung oder Erhöhung wirkenden Kräfte kann es jedoch vorteilhaft sein, daß zur Übertragung der Vibrationsbewegung auf das vibrierende Bauteil ein Großteil oder alle der auf dem vibrierenden Bauteil angeordneten reliefartigen Vertiefungen oder Erhöhungen genutzt werden. Insbesondere zum Ausgleich von Toleranzen ist die relative Lage des Werkzeugs zum vibrierenden Bauteil über mindestens zwei mit Vertiefungen zusammenwirkende Erhöhungen festgelegt, wobei die Breite der Erhöhungen in Richtung der Vibrationsbewegung kleiner als die Breite der zugeordneten Vertiefungen ist. Dabei können die Vertiefungen sowohl am Werkstück als auch am Werkzeug angeordnet sein.

Ausführungsbeispiele der Erfindung werden im folgenden anhand der Zeichnung erläutert. Es zeigen:
- Fig. 1: eine schematische Darstellung des Werkzeugs und der beiden zu verbindenden Bauteile im Schnitt,
- Fig. 2: ein anderes Ausführungsbeispiel in einer Darstellung entsprechend Fig. 1,
- Fig. 3: eine perspektivische Ansicht eines in Vibration zu versetzenden Bauteils,
- Fig. 4: eine perspektivische Ansicht einer Ausführungsvariante zu Fig. 3.

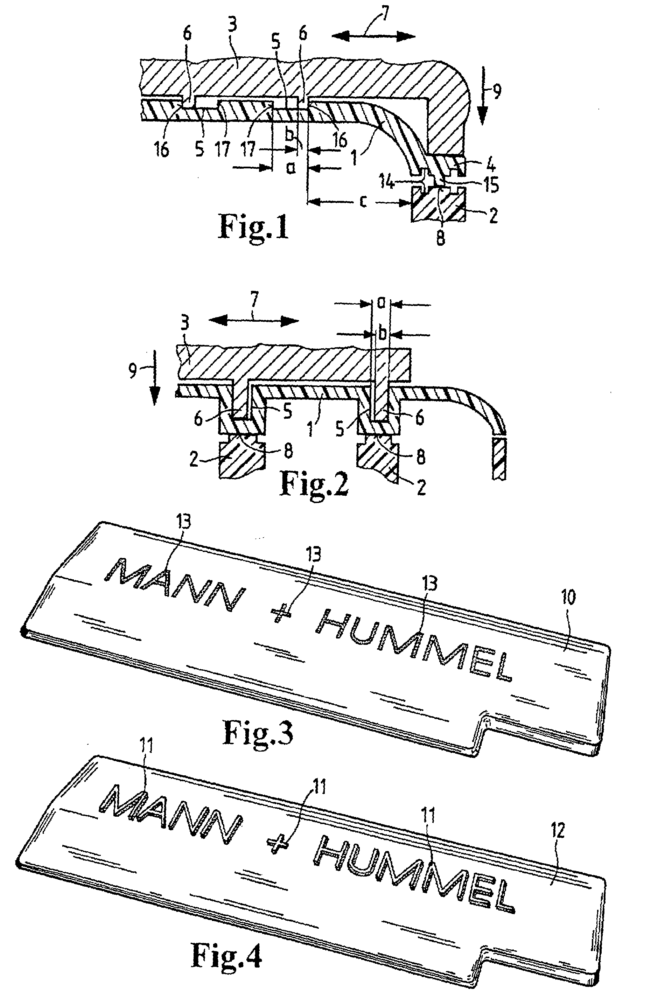

Fig. 1 zeigt zwei Bauteile 1 und 2, die an einem Schweißrand 4 durch Vibrationsschweißen miteinander verbunden werden sollen. Am Schweißrand 4 sind an der Schweißfläche 8 in Längsrichtung des Schweißrands verlaufende Nuten 14 sowie ein Steg 15 angeordnet. Beim Schweißen wird das Material des Stegs 15 geschmolzen und fließt in die seitlich davon angeordneten Nuten 14. Dies ermöglicht eine gute Schweißverbindung. Das Werkzeug 3 preßt entlang des Schweißrands 4 das vibrierende Bauteil 1 in Richtung des Pfeils 9 auf das ortsfeste Bauteil 2.

Das Bauteil 1 weist reliefartige Vertiefungen 5 auf, die vom Schweißrand einen Abstand c haben. Das Werkzeug 3 weist Erhöhungen 6 auf, die in die Vertiefungen 5 des Bauteils 1 einragen. Vom Werkzeug 3 wird die etwa senkrecht zum Anpreßdruck 9 verlaufende Vibrationsbewegung 7 auf das vibrierende Bauteil 1 übertragen. Die Übertragung der Vibrationsbewegung 7 erfolgt über die Erhöhungen 6 und die Vertiefungen 5. Dazu liegen die Vertiefungen 6 jeweils an einer in Vibrationsrichtung gelegenen Seitenwand 16 der Vertiefungen 5 an, wobei die beiden Seitenwände 16 die beiden voneinander abgewandten Seitenwände der Vertiefungen 5 sind. Es kann jedoch auch zweckmäßig sein, daß die Erhöhungen 6 an den einander zugewandten Seitenwänden 17 der Vertiefungen 5 zur Anlage kommen. Die Erhöhungen 6 weisen eine in Richtung der Vibrationsbewegung 7 gemessene Breite b auf, die kleiner als die in der selben Richtung gemessene Breite a der Vertiefungen 5 ist.

In Fig. 2 ist ein Bauteil 1 und ein mit diesem zu verbindendes Bauteil 2 dargestellt, wobei im Bauteil 1 Vertiefungen 5 angeordnet sind, die zur Übertragung der Vibrationsbewegung 7 vom Werkzeug 3 dienen. Hierzu ragen in die Vertiefungen 5 Erhöhungen 6 des Werkzeugs 3. An der dem Werkzeug 3 abgewandten Seite der Vertiefung 5 ist die Schweißfläche 8 angeordnet, an der das Bauteil 1 mit dem ortsfesten Bauteil 2 verbunden wird. Über die Erhöhung 6 wird somit sowohl der Anpreßdruck in einer Richtung 9 als auch die Vibrationsbewegung in der Richtung 7 übertragen. Zur Vermeidung von Toleranzproblemen ist auch hier die Breite b der Erhöhung 6 kleiner als die Breite a der Vertiefung 5, wobei die Differenz verhältnismäßig klein ist, um eine ausreichend große Auflagefläche zur Übertragung des Anpreßdrucks an der Erhöhung 6 zu erhalten.

In den Fig. 3 und 4 sind zu vibrierende Bauteile 10 und 12 dargestellt, die beispielweise Designabdeckungen für Luftfilter oder Motorblöcke in Kraftfahrzeugen sein können. Das in Fig. 3 dargestellte zu vibrierende Bauteil 10 weist einen Schriftzug auf, der als reliefartige Vertiefungen 13 ausgebildet ist. In die reliefartigen Vertiefungen 13 ragen beim Vibrationsschweißvorgang Erhöhungen des Werkzeugs, über die die Vibrationsbewegung vom Werkzeug auf das vibrierende Bauteil 10 übertragen wird. In Fig. 4 ist ein vibrierendes Bauteil 12 dargestellt, das einen Schriftzug aufweist, der als reliefartige Erhöhungen 11 ausgebildet ist und über den die Vibrationsbewegung über Vertiefungen am Werkzeug übertragen wird.

Beim Verschweißen zweier Bauteile ist ein Bauteil dem Werkzeug zugeordnet, wobei das Werkzeug dem Bauteil entsprechende Vertiefungen oder Erhöhungen aufweist. Das Werkzeug führt eine Vibrationsbewegung aus, die auf das Bauteil über die Erhöhungen oder Vertiefungen übertragen wird. Gleichzeitig wird das vibrierende Bauteil 1 vom Werkzeug am Schweißrand gegen das ortsfeste Bauteil 2 gedrückt. Dadurch werden die Bauteile 1 und 2 miteinander verschweißt, ohne daß zur Übertragung der Vibrationsbewegung 7 Strukturierungen am Werkzeug 3 notwendig sind, die sich nach dem Vibrationsschweißvorgang störend am Schweißrand 4 abzeichnen würden.

## Patentansprüche

1. Verfahren zum Vibrationsschweißen zweier Bauteile (1, 10, 12; 2), die an einer Schweißfläche (8) miteinander verbunden werden, wobei auf das vibrierende Bauteil (2, 10, 12) vom Werkzeug (3) die Vibrationsbewegung (7) übertragen wird und das andere Bauteil (2) ortsfest angeordnet ist, und wobei das Werkzeug (3) das vibrierende Bauteil (1, 10, 12) in einer Richtung (9) etwa senkrecht zur Vibrationsbewegung (7) auf das ortsfeste Bauteil (2) preßt, wobei das vibrierende Bauteil (1, 10, 12) mindestens eine reliefartig ausgebildete Vertiefung (5, 13) oder Erhöhung (6, 11) aufweist, über die die Vibrationsbewegung (7) vom Werkzeug (3) auf das vibrierende Bauteil (1, 10, 12) übertragen wird, **dadurch gekennzeichnet, daß** die Vertiefung (5, 13) oder Erhöhung (6, 11) ein Schriftzug oder Logo ist.

2. Verfahren nach Anspruch 1,
**dadurch gekennzeichnet, daß** die Schweißfläche (8) an einem umlaufenden Schweißrand (4) ausgebildet ist, der zu einer Vertiefung (5, 13) oder Erhöhung (6, 11) einen Abstand (c) aufweist.

3. Verfahren nach Anspruch 1,
**dadurch gekennzeichnet, daß** das vibrierende Bauteil (1, 10, 12) Vertiefungen (5) aufweist, deren dem Werkzeug (3) abgewandte und dem anderen Bauteil (2) zugewandte Fläche die Schweißfläche (8) darstellt.

4. Werkzeug zur Durchführung eines Verfahrens zum Vibrationsschweißen zweier Bauteile (1, 10, 12; 2), die an einer Schweißfläche miteinander verbunden werden, wobei das vibrierende Bauteil (2, 10, 12) am Werkzeug (3) und das andere Bauteil (2) ortsfest angeordnet ist, wobei
das Werkzeug (3) mindestens eine Erhöhung (6) oder Vertiefung aufweist, die auf eine Vertiefung (5) oder Erhöhung des zu vibrierenden Bauteils (1) abgestimmt ist und zur Übertragung der Vibrationsbewegung (7) des Werkzeugs (3) mit dieser zusammenwirkt **dadurch gekennzeichnet, daß** die Vertiefung (5, 13) oder Erhöhung (6, 11) des zu vibrierenden Bauteils (1) ein Schriftzug oder Logo ist.

5. Werkzeug nach Anspruch 4,
**dadurch gekennzeichnet, daß** die relative Lage des Werkzeugs (3) zum vibrierenden Bauteil (1) über mindestens zwei mit Vertiefungen (5) zusammenwirkende Erhöhungen (6) festgelegt ist, wobei die Breite (b) der Erhöhungen (6) in Richtung der Vibrationsbewegung (7) kleiner als die Breite (a) der zugeordneten Vertiefungen (5) ist.

## Claims

1. Method for the vibration welding of two components (1, 10, 12; 2), which are to be interconnected at a weld face (8), wherein the vibratory movement (7) is transmitted to the vibrating component (1, 10, 12) by the tool (3) and the other component (2) is non displaceably disposed, and wherein the tool (3) presses the vibrating component (1,10,12), in a direction (9) substantially perpendicular relative to the vibratory movement (7), onto the non-displaceable component (2), wherein the vibrating component (1,10,12) has at least one relief-like recess (5, 13) or elevation (6, 11), via which the vibratory movement (7) is transmitted from the tool (3) to the vibrating component (1,10,12), **characterised in that** the recess (5, 13) or elevation (6,11) is lettering or a logo.

2. Method according to claim 1, **characterised in that** the weld face (8) is configured at a circumferential weld edge (4), which is at a spacing (c) from a recess (5, 13) or elevation (6,11).

3. Method according to claim 1, **characterised in that** the vibrating component (1, 10, 12) has recesses (5), the face of which, which is remote from the tool (3) and facing the other component (2), represents the weld face (8).

4. Tool for the accomplishment of a method for the vibration welding of two components (1,10, 12; 2), which are interconnected at a weld face, wherein the vibrating component (1,10, 12) is disposed on the tool (3) and the other component (2) is non displaceable, wherein the tool (3) has at least one elevation (6) or recess, which corresponds with a recess (5) or elevation of the component (1) to be vibrated and interacts with the same to transmit the vibratory movement (7) of the tool (3), **characterised in that** the recess (5, 13) or elevation (6, 11) of the component (1) to be vibrated is lettering or a logo.

5. Tool according to claim 4, **characterised in that** the position of the tool (3) relative to the vibrating component (1) is established via at least two elevations (6) interacting with recesses (5), wherein the width (b) of the elevations (6) in the direction of the vibratory movement (7) is smaller than the width (a) of the associated recesses (5).

## Revendications

1. Procédé de soudage par vibration de deux pièces (1, 10, 12 ; 2) reliées l'une à l'autre par une surface de soudage (8),
la pièce vibrante (2, 10, 12) recevant les mouvements de vibration (7) par l'outil (3) et l'autre pièce (2) est fixe,
l'outil (3) pressant la pièce vibrante (1, 10, 12) dans une direction (9) sensiblement perpendiculaire au mouvement de vibration (7) contre la pièce fixe (2),
la pièce vibrante (1, 10, 12) ayant au moins une cavité (5, 13) ou un bossage (6, 11) en forme de relief par lesquels le mouvement vibrant (7) est transmis de l'outil (3) à la pièce vibrante (1, 10, 12),
**caractérisé en ce que**
la cavité (5, 13) ou le bossage (6, 11) sont constitués par une inscription ou un logo.

2. Procédé selon la revendication 1,
**caractérisé en ce que**
la surface de soudage (8) est réalisée sur un bord de soudage périphérique (4) distant de la distance (c) par rapport à une cavité (5, 13) ou un bossage (6, 11).

3. Procédé selon la revendication 1,
**caractérisé en ce que**
la pièce vibrante (1, 10, 12) comporte des cavités (5) dont la surface non tournée vers l'outil (3) mais tournée vers l'autre pièce (2) constitue la surface de soudage (8).

4. Outil pour la mise en oeuvre du procédé de soudage par vibration de deux pièces (1, 10, 12 ; 2) reliées l'une à l'autre par une surface de soudage,
selon lequel
la pièce vibrante (2, 10, 12) est montée fixe sur l'outil (3) et sur l'autre pièce (2),
selon lequel
l'outil (3) comporte au moins un bossage (6) ou une cavité correspondant à une cavité (5) ou un bossage de la pièce vibrante (1) et pour transmettre le mouvement vibrant (7) de l'outil (3) elle coopère avec cet outil,
**caractérisé en ce que**
la cavité (5, 13) ou le bossage (6, 11) de la pièce vibrante (1) sont constitués par une inscription ou un logo.

5. Outil selon la revendication 4,
**caractérisé en ce que**
la position relative de l'outil (3) par rapport à la pièce vibrante (1) est fixée par au moins deux bossages (6) coopérant avec des cavités (5),
la largeur (b) des bossages (6) dans la direction du mouvement vibrant (7) étant inférieure à la largeur (a) des cavités (5) associées.
